# EUROPEAN PATENT APPLICATION

(11) **EP 2 752 746 A2**
(43) Date of publication of application: **09.07.2014**
(21) Application number: 14150356.5
(22) Date of filing: 07.01.2014
(51) Int. Cl.: G06F 3/0481, G06F 3/0488

(54) **Mobile device system providing hybrid widget and associated control**

(30) Priority: 07.01.2013 KR 20130001824
(71) Applicant: Samsung Electronics Co., Ltd, Gyeonggi-do 443-742 (KR)
(72) Inventor: Jegal, Yun, 443-742 Gyeonggi-do (KR); Yang, Chang-Mo, 443-742 Gyeonggi-do (KR); Jong, In-Won, 443-742 Gyeonggi-do (KR)
(74) Representative: Jenkins, Richard Gavin

(57) **Abstract**

A control method of a mobile device providing hybrid widgets includes: displaying a first hybrid widget on a touch screen; detecting a gesture made via said touch screen; and in response to detecting the gesture, converting the first hybrid widget into a second hybrid widget, and displaying the second hybrid widget on the touch screen.

## Description

### BACKGROUND

### 1. Field of the Invention

The present disclosure relates generally to a mobile device and a control method of the mobile device.

### 2. Description of the Related Art

As known, widgets are present in mobile devices and correspond to applications of the mobile devices. The widgets are capable of displaying screens or functions of the corresponding applications.

However, the widgets display particular screens or functions of the corresponding applications, and typically fail to provide functions performed in conjunction with other applications. As a result, known widgets provide services limited to the functions of the corresponding applications. A system according to invention principles provides widgets supporting functions performed in conjunction with applications different from the applications corresponding to the widgets.

### SUMMARY

In one embodiment, a mobile device system provides widgets with a hybrid function and a control method of the mobile device system provides the hybrid widgets. The method includes: displaying a first hybrid widget on a touch screen; detecting a gesture made via the touch screen; and in response to detecting the gesture made via the touch screen, converting the first hybrid widget into a second hybrid widget, and displaying the second hybrid widget on the touch screen.

According to embodiments of the present invention, a first hybrid widget is converted into a second hybrid widget related to the first hybrid widget in response to a detected gesture.

### BRIEF DESCRIPTION OF THE DRAWINGS

The above and other aspects, features, and advantages of the present invention will be more apparent from the following detailed description taken in conjunction with the accompanying drawings, in which:
FIG. 1 is a schematic block diagram showing a mobile device according to an embodiment of the present invention;
FIG. 2 is a front perspective view showing a mobile device according to an embodiment of the present invention;
FIG. 3 is a rear perspective view showing a mobile device according to an embodiment of the present invention;
FIG. 4 is a flowchart showing a control method of a mobile device providing a hybrid widget according to an embodiment of the present invention;
FIGS. 5A and 5B show examples of a screen where a control method of a mobile device providing a hybrid widget according to an embodiment of the present invention is performed;
FIGS. 6A and 6B show examples of a screen where a control method of a mobile device providing a hybrid widget according to a first embodiment of the present invention is performed;
FIGS. 7A, 7B, 7C, and 7D show examples of a screen where a control method of a mobile device providing a hybrid widget according to a second embodiment of the present invention is performed;
FIGS. 8A, 8B, 8C, and 8D show examples of a screen where a control method of a mobile device providing a hybrid widget according to a third embodiment of the present invention is performed; and
FIGS. 9A, 9B, 9C, 9D, 10A, 10B, 10C and 10D show examples of a screen where a control method of a mobile device providing a hybrid widget according to a fourth embodiment of the present invention is performed.

### DETAILED DESCRIPTION

Various example embodiments will now be described more fully with reference to the accompanying drawings in which some example embodiments are shown. However, specific structural and functional details disclosed herein are merely representative for purposes of describing example embodiments. Thus, the invention may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the invention.

Although the terms including an ordinal number such as first, second, etc. can be used for describing various elements, the elements are not restricted by the terms. The terms are only used to distinguish one element from another element. For example, a first element could be termed a second element, and similarly, a second element could be also termed a first element without departing from the scope of the present invention. As used herein, the term "and/or" includes any and all combinations of one or more of the associated listed items.

The terms used in this application is for the purpose of describing particular embodiments only and is not intended to be limiting of the invention. As used herein, the singular forms are intended to include the plural forms as well, unless the context clearly indicates otherwise. It will be further understood that the terms "includes" and/or "including", when used in this specification, specify the presence of stated features, integers, steps, operations, elements, components, and/or groups thereof but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein. No claim element herein is to be construed under the provisions of 35 U.S.C. 112, sixth paragraph, unless the element is expressly recited using the phrase "means for". A graphical user interface (GUI) widget ("widget") as used herein comprises an icon-based user interface usable on computers and smartphones, for example, and associated executable application and that displays information on a screen and interacts with a user. A "hybrid widget" is a mixture between a graphical user interface (GUI) widget and a tangible interface.

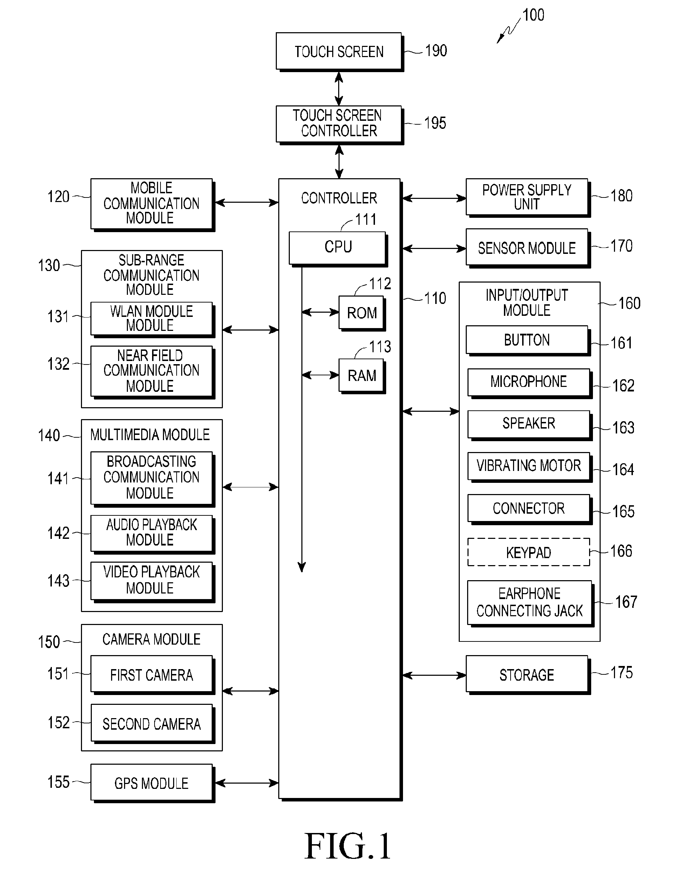

FIG. 1 is a schematic block diagram showing a mobile device according to an embodiment of the present invention.

Referring to FIG. 1, a device 100 may be connected with an external device (not shown) by using an external device connector such as a sub-communication module 130, a connector 165, and an earphone connecting jack 167. The external device may include various devices such as an earphone, an external speaker, a universal serial bus (USB) memory, a charger, a cradle, a docking station, a DMB antenna, a mobile payment related device, a health care device (a blood sugar measuring device), a game machine, and a vehicle navigation device, which may be detachably connected to the device 100 in a wired manner. Moreover, the external device may include a Bluetooth communication device, a near field communication (NFC) device, a Wi-Fi Direct communication device, and a wireless access point (AP), which may be connected to the device 100 in a wireless manner through near field communication. Furthermore, the external device may include other devices such as a cell phone, a smart phone, a tablet PC, a desktop PC, and a server.

Referring to FIG. 1, the device 100 may include a display unit 190, and a display controller 195. Moreover, the device 100 may include a controller 110 (a processor, processing device, computer for example), a mobile communication module 120, a sub-communication module 130, a multimedia module 140, a camera module 150, a GPS module 155, an input/output module 160, a sensor module 170, a storage unit 175, and a power supply unit 180. The sub-communication module 130 may include at least one of a wireless LAN module 131 and a near field communication module 132, and the multimedia module 140 includes at least one of a broadcasting communication module 141, an audio playback module 142, and a video playback module 143, or any combination thereof. The camera module 150 may include at least one of a first camera 151 and a second camera 152, and the input/output module 160 may include at least one of a button 161, a microphone 162, a speaker 163, a vibration motor 164, a connector 165, a keypad 166, and an earphone connecting jack 167. Hereinafter, an embodiment in which the display unit 190 and the display controller 195 correspond to a touch screen and a touch screen controller, respectively, is described.

The controller 110 may include a CPU 111, a ROM 112 in which control programs for control of the device 100 are stored, and a RAM 113 which stores signals or data input from the outside of the device 100, or is used as a memory area for operations performed in the device 100. The CPU 111 may include a single core, a dual core, a triple core, or a quad core, for example. The CPU 111, the ROM 112, and the RAM 113 may be connected with each other through an internal bus.

The controller 110 may control the mobile communication module 120, the sub-communication module 130, the multimedia module 140, the camera module 150, the GPS module 155, the input/output module 160, the sensor module 170, the storage unit 175, the power supply unit 180, the touch screen 190, and the touch screen controller 195.

The mobile communication module 120 allows the device 100 to be connected with an external device through mobile communication by using at least one antenna (not shown) or a plurality of antennas (not shown) under the control of the controller 110. The mobile communication module 120 transmits/receives wireless signals for a voice call, a video call, a short message service (SMS), or a multimedia message service (MMS) to/from a cell phone (not shown), a smart phone (not shown), a tablet PC (not shown), or other devices (not shown), having phone numbers which are input to the device 100.

The sub-communication module 130 may include at least one of the wireless LAN module 131, and the near field communication module 132. For example, the sub-communication module 130 may include just the wireless LAN module 131, just the near field communication module 132, or both the wireless LAN module 131 and the near field communication module 132.

The wireless LAN module 131 may be connected to the internet, at the place where the wireless access point (AP) (not shown) is installed, under the control of the controller 110. The wireless LAN module 131 supports a wireless LAN protocol (IEEE802.11x) of the Institute of Electrical and Electronics Engineers (IEEE). The near field communication module 132 may perform near field communication in a wireless manner between the device 100 and an image forming device (not shown) under the control of the controller 110. The near field communication method may include Bluetooth, infrared data association (IrDA), Wi-Fi direct communication, and near field communication (NFC).

The device 100 may include at least one of the mobile communication module 120, the wireless LAN module 131, and the near field communication module 132 according to the performance thereof. For example, the device 100 may include combinations of the mobile communication module 120, the wireless LAN module 131, and the near field communication module 132 according to the performance thereof.

The multimedia module 140 may include the broadcasting communication module 141, the audio playback module 142, or the video play module 143. The broadcasting communication module 141 may receive a broadcasting signal (for example, a TV broadcasting signal, a radio broadcasting signal, or a data broadcasting signal), and broadcasting additional information (for example, electric program guide (EPS), or electric service guide (ESG)), which have been transmitted from a broadcasting station through a broadcasting communication antenna, under the control of the controller 110. The audio play module 142 may play digital audio files (for example, files with an extension such as mp3, wma, ogg, and wav) which are stored or received under the control of the controller 110. The video play module 143 plays digital video files (for example, files with an extension such as mpeg, mpg, mp4, avi, mov, and mkv) which are stored or received under the control of the controller 110. The video play module 143 may also play the digital audio files.

The multimedia module 140 may include the audio play module 142, and the video play module 143, exclusive of broadcasting communication module 141. Moreover, the audio play module 142 or the video play module 143 of the multimedia module 140 may be included in the controller 110.

The camera module 150 may include at least one of the first camera 151 and the second camera 152 for photographing still images and videos under the control of the controller 110. Moreover, the first camera 151 and the second camera 152 may include a sub-light source (for example, a flash (not shown)) providing a needed quantity of light for the photography. The first camera 151 may be disposed on a front surface of the device 100, and the second camera 152 may be disposed on a rear surface of the device 100. Otherwise, the first camera 151 and the second camera 152 may be disposed adjacent to each other (for example, an interval between the first camera 151 and the second camera 152 is larger than a distance of 1 cm, and smaller than a distance of 8 cm) to photograph three dimensional still images or three dimensional moving images.

The GPS module 155 may receive electric waves from a plurality of GPS satellites (not shown) in earth orbit, and may calculate a location of the device 100 by using the arrival times of the electric waves from the GPS satellites (not shown) to the device 100.

The input/output module 160 may include at least one of a plurality of buttons 161, the microphone 162, the speaker 163, the vibration motor 164, the connector 165, and the keypad 166.

The buttons 161 may be formed on a front surface, a side surface, or a rear surface of a housing of the device 100, and may include at least one of a power/lock button, a volume button, a menu button, a home button, a back button, and a search button.

The microphone 162 receives voices or sounds to generate electric signals under the control of the controller 110.

The speaker 163 may output sounds corresponding to various signals (for example, a wireless signal, a broadcasting signal, a digital audio file, a digital video file, or photography) of the mobile communication module 120, the sub-communication module 130, the multimedia module 140, or the camera module 150, to the outside of the device 100 under the control of the controller 110. The speaker 163 may output sounds (for example, a button operation tone corresponding to a telephone call, or a call connection tone) corresponding to functions which the device 100 performs. One or a plurality of speakers 163 may be formed at a proper location or locations of the housing of the device 100.

The vibration motor 164 may convert an electric signal into a mechanical vibration under the control of the controller 110. For example, when receiving a voice call from another device (not shown), the device 100 in a vibration mode operates the vibration motor 164. One or a plurality of vibration motors 164 may be formed in the housing of the device 100. The vibration motor 164 may operate in response to a touch of a user on the touch screen 190, and a continuous movement of a touch on the touch screen 190.

The connector 165 may be used as an interface for connecting the device 100 with the external device (not shown) or a power source (not shown). The device 100 may transmit data stored in the storage unit 175 of the device 100 to the external device (not shown), or may receive data from the external device (not shown) through a wired cable connected to the connector 165 under the control of the controller 110. At this time, the external device may correspond to a docking station, and the data may correspond to an input signal transferred from an external input device such as a mouse, and a keyboard. Moreover, the device 100 may receive electric power from the power source (not shown) through the wired cable connected to the connector 165, or may charge a battery (not shown) by using the power source.

The keypad 166 may receive a key input from the user for the control of the device 100. The keypad 166 includes a physical keypad (not shown) formed in the device 100, or a virtual keypad (not shown) displayed on the touch screen 190. The physical keypad formed in the device 100 may be excluded according to the performance or the structure of the device 100.

An earphone may be inserted into the earphone connecting jack 167 to be connected to the device 100.

The sensor module 170 includes at least one sensor for detecting the state of the device 100. For example, the sensor module 170 may include a proximity sensor for detecting a user's proximity to the device 100, and an illumination sensor (not shown) for detecting a quantity of light around the device 100. Moreover, the sensor module 170 may include a gyro sensor. The gyro sensor may detect, motion of the device 100 (for example, rotation of the device 100, and acceleration or vibration applied to the device 100), a point of a compass by using earth's magnetic field, and a direction of gravity. The sensor module 170 may include an altimeter for detecting an altitude by measuring atmospheric pressure. At least one sensor may detect the state of device 100, generate a signal corresponding to the detection, and transmit the signal to the controller 110. The at least one sensor of the sensor module 170 may be added or omitted according to the performance of the device 100.

The storage unit 175 may store the signal or the data, which is input and output to correspond to operations of the mobile communication module 120, the sub-communication module 130, the multimedia module 140, the camera module 150, the GPS module 155, the input/output module 160, the sensor module 170, and the touch screen 190, under the control of the controller 110. The storage unit 175 may store control programs for the control of the device 100 or the controller 110, or applications.

The term referred to as "storage unit" is used with the meaning including the storage unit 175, the ROM 112 and the RAM 113 in the controller 110, or a memory card (not shown) (for example, an SD card, and a memory stick) which is mounted to the device 100. The storage unit may include a nonvolatile memory, a volatile memory, a hard disk drive (HDD), or a solid state drive (SSD).

The power supply unit 180 may supply electric power to one or a plurality of batteries (not shown) disposed in the housing of the device 100 under the control of the controller 110. The one or the plurality of batteries (not shown) supply the electric power to the device 100. Moreover, the power supply unit 180 may supply the electric power, which is input from an external power source (not shown) through the wired cable connected with the connector 165, to the device 100. Furthermore, the power supply unit 180 may also supply the electric power, which is input in a wireless manner from the external power source through a wireless charging technology, to the device 100.

The touch screen 190 may provide user interfaces corresponding to various services (for example, telephone calls, data transmission, broadcasting, and photography) to the user. The touch screen 190 may transmit an analog signal, corresponding to at least one touch which is input to the user interface, to the touch screen controller 195. The touch screen 190 may receive the at least one touch from a user (for example, fingers including a thumb), or a touchable input means (for example, a stylus pen). Moreover, the touch screen 190 may receive a continuous movement of the at least one touch. The touch screen 190 may transmit an analog signal corresponding to the continuous movement of the input touch to the touch screen controller 195.

In the present invention, the touch is not limited to the contact between the touch screen 190 and the user's body or the touchable input means, and the touch may include noncontact. The detectable interval on the touch screen 190 may be changed according to the performance or the structure of the device 100.

For example, the touch screen 190 may be realized in a resistive manner, a capacity manner, an infrared manner, or an acoustic wave manner.

The touch screen controller 195 converts the analog signal received from the touch screen 190 to a digital signal (for example, X and Y coordinates), and then transmits the digital signal to the controller 110. The controller 110 may control the touch screen 190 by using the digital signal received from the touch screen controller 195. For example, the controller 110 may allow a shortcut icon (not shown) displayed on the touch screen 190 to be selected in response to the touch, or may execute the shortcut icon. Moreover, the touch screen controller 195 may also be included in the controller 110.

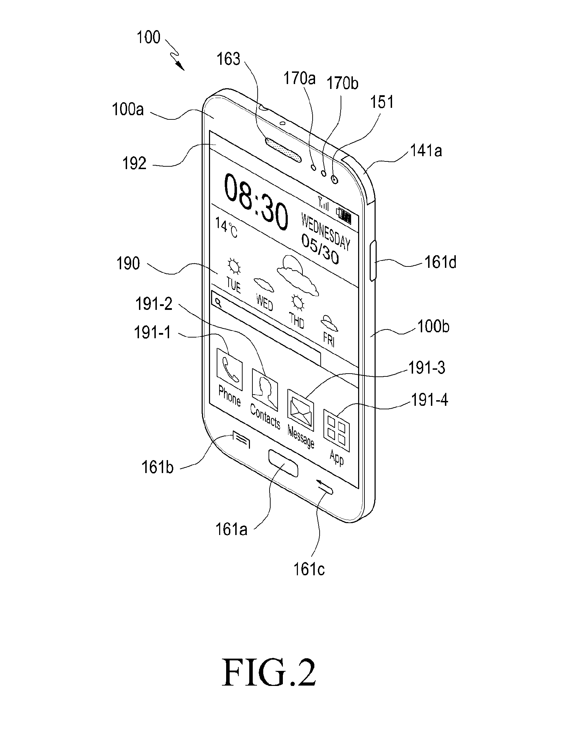

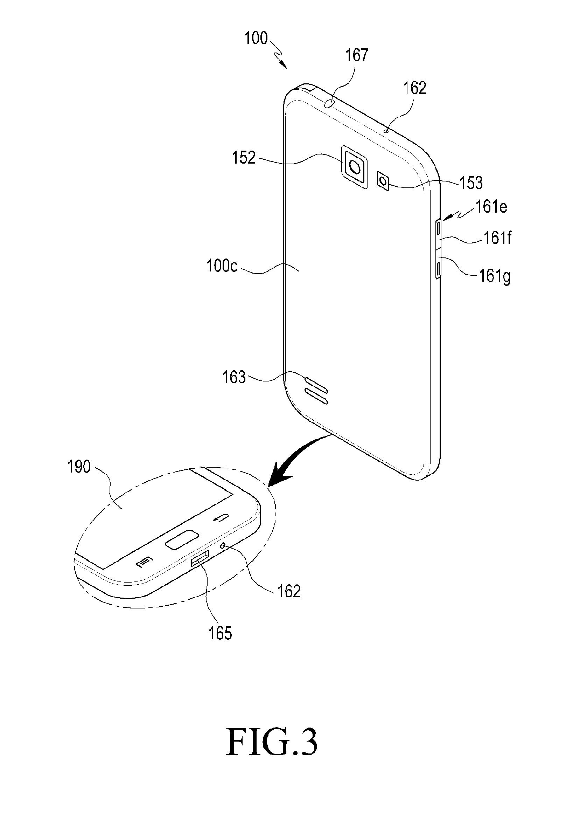

FIG. 2 is a front perspective view showing a mobile device according to an embodiment of the present invention. FIG. 3 is a rear perspective view showing a mobile device according to an embodiment of the present invention.

Referring to FIG. 2, a touch screen 190 is disposed at a central area of a front surface 100a of device 100. The touch screen 190 is formed to occupy most of the front surface 100a of the device 100. FIG. 2 shows an embodiment in which a main home screen is displayed on the touch screen 190. The main home screen corresponds to a first screen displayed on the touch screen 190, when the power source of the device 100 is turned on. Moreover, in a case in which the device 100 has several pages of different home screens, the main home screen may correspond to a first home screen of the several pages of home screens. Shortcut icons 191-1, 191-2, and 191-3 for executing frequently used applications, an application converting key 191-4, a time, and weather may be displayed in the home screen. The application converting key 191-4 enables selection and display of application icons showing the applications on the touch screen 190. Furthermore, a status bar 192 displays a state of the device 100 such as a battery charging state, an intensity of a received signal, and a current time formed at an upper end portion of the touch screen 190, for example.

A home button 161a, a menu button 161b, and a back button 161 c may be formed at a lower portion of the touch screen 190.

Through the home button 161a, a main home screen is displayed on the touch screen 190. For example, when the home button 161a is pressed (touched) in a state where the main home screen, and another home screen or the menu screen are displayed on the touch screen 190, the main home screen may be displayed on the touch screen 190. Moreover, when the home button 161a is pressed (touched), while the applications are executed on the touch screen 190, the main home screen shown in FIG. 2 may be displayed on the touch screen 190. Furthermore, the home button 161 a may be used to allow displaying of the recently used applications or a task manager on the touch screen 190.

The menu button 161b provides a connection menu which may be used on the touch screen 190. The connection menu may include a widget addition menu, a background image change menu, a search menu, an edition menu, and an environment setup menu. When the applications are executed, the menu button 161b may provide connection menus connected to the applications.

Through the back button 161c, a screen executed shortly before the currently executed screen may be displayed, or the application which is most recently used may be terminated.

A first camera 151, an illumination sensor 170a, and a proximity sensor 170b may be disposed at an upper edge portion of the front surface 100a of the device 100. A second camera 152, a flash 153, and a speaker 163 may be disposed on a rear surface 100c of the device 100.

For example, a power/reset button 161d, a volume adjusting button 161f, 161e and 161g, a terrestrial DMB antenna 141a for receiving of broadcasts, and one or a plurality of microphones 162 may be disposed on side surface 100b of the device 100. The DMB antenna 141a may be fixed to the device 100, or may be detachably formed.

Moreover, a connector 165 may be formed on a lower side surface of the device 100. A plurality of electrodes are formed in the connector 165, and may be connected with the external device in the wired manner. An earphone jack 167 may be formed on an upper side surface of the device 100. An earphone may be inserted into the earphone jack 167.

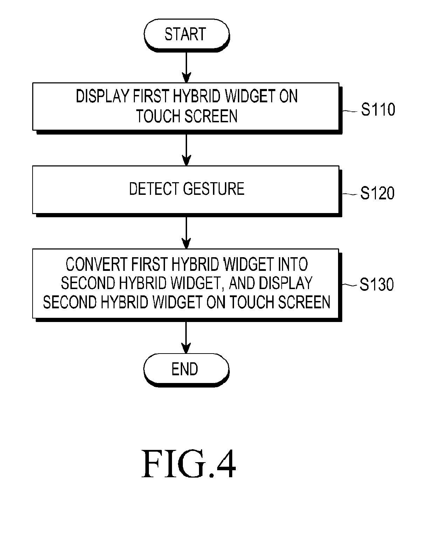

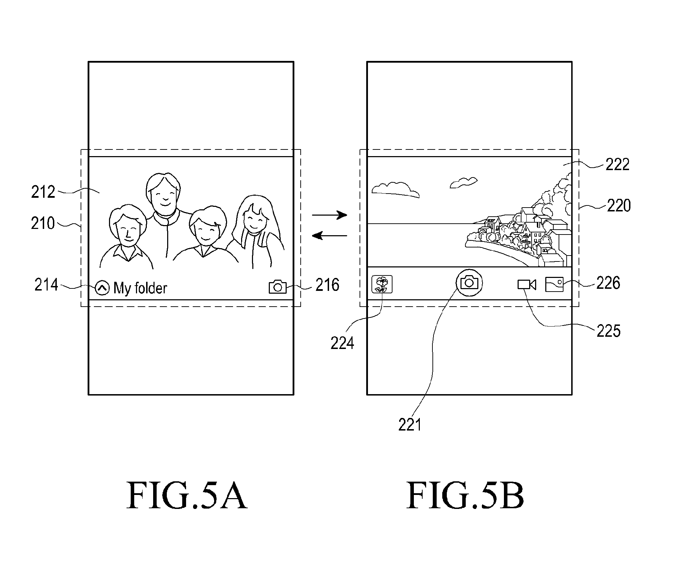

FIG. 4 is a flowchart showing a control method of a mobile device providing a hybrid widget according to an embodiment of the present invention. FIGS. 5A and 5B show examples of a screen where a control method of a mobile device providing a hybrid widget according to an embodiment of the present invention is performed.

Referring to FIG. 4, first, in the control method of the mobile device providing the hybrid widget according to the embodiment of the present invention, a first hybrid widget is displayed on a touch screen (step S110). A controller 110 of a mobile device 100 executes the first hybrid widget. The controller 110 displays the first hybrid widget on the touch screen. In this case, the first hybrid widget refers to a widget including a hybrid function. The widget may display some functions or information of an application in a home screen. A widget may be formed to correspond to the application. That is, the widget may display some functions or information of the application corresponding to the widget in the home screen on the touch screen, and may provide them to a user. For example, referring to FIG. 5A, a first hybrid widget 210 is displayed on a touch screen 190. The first hybrid widget 210 may be formed to correspond to a gallery application. That is, the first hybrid widget 210 may display some functions or information of the gallery application in the home screen. For example, as shown in FIG. 5A, the controller 110 may display, in the first hybrid widget 210, a function of displaying and providing a photograph 212 in a gallery form. Further, the controller 110 may display, in the first hybrid widget 210, an icon 214 for opening a folder in which the photograph has been stored.

A gesture is detected (step S120) by controller 110. The gesture may correspond to a touch on an icon displayed in the first hybrid widget and gesture may be preset and stored in storage unit 175. The icon may provide a function for converting the first hybrid widget into a second hybrid widget. Controller 110 converts the first hybrid widget into a second hybrid widget by using a map or lookup table associating a first hybrid widget and associated User Interface elements including displayed image, buttons and associated application functions with a corresponding second hybrid widget and associated User Interface elements including displayed image, buttons and associated application functions. The lookup table may associate a first hybrid widget with a plurality of second hybrid widgets and a particular second hybrid widget is selected in response to a relationship between executable applications associated with the first and second hybrid widgets, user command and/or application being performed and other context information. Accordingly, the controller 110 may display the icon in the first hybrid widget and detect a touch on the icon. For example, as shown in FIG. 5A, the controller 110 may display an icon 216 in the first hybrid widget 210.

In response to detection of the gesture, the first hybrid widget is converted into the second hybrid widget, and the second hybrid widget is displayed on the touch screen (step S 130). In response to detection of the gesture , the controller 110 may convert the first hybrid widget into the second hybrid widget, and may display the second hybrid widget on the touch screen 190. The first hybrid widget may be related to the second hybrid widget. For example, the first and the second hybrid widgets may be related to each other and to a task. For example, the first hybrid widget may correspond to the gallery application, and the second hybrid widget may correspond to a camera application. At this time, the first hybrid widget corresponding to the gallery application, and the second hybrid widget corresponding to the camera application are related to each other with respect to a task for a photography function. The first hybrid widget corresponding to the gallery application may provide a function for displaying the photograph which has been taken in the gallery form, and the second hybrid widget corresponding to the camera application may provide a function for taking the photograph. Accordingly, the first hybrid widget and the second hybrid widget are related to each other with respect to the task for the photography function.

For example, when a touch on the icon 216 displayed in the first hybrid widget is detected as shown in FIG. 5A, the controller 110 may convert the first hybrid widget 210 into a second hybrid widget 220, and may display the second hybrid widget 220 on the touch screen 190 as shown in FIG. 5B. That is, when the touch on the icon 216 is detected, the controller 110 may convert the first hybrid widget 210 corresponding to the gallery application into the second hybrid widget 220 corresponding to the camera application. The controller 110 may display the second hybrid widget 220 on the touch screen 190. At this time, an icon 221 for photographing a still image, an icon 224 for displaying the photographed image on the touch screen, an icon 225 for photographing a moving image, or an icon 226 for converting the second hybrid widget into the first hybrid widget may be included in the second hybrid widget 220, and may be displayed on the touch screen 190.

Thus, according to the embodiment of the present invention, the widget with the hybrid function may be provided. That is, according to the embodiment of the present invention, the gesture is detected using known methods (e.g. touch screen coordinate path detection and recognition), whereby the first hybrid widget may be converted into the second hybrid widget related to the first hybrid widget. Therefore, according to the embodiment of the present invention, the hybrid widgets capable of performing a conversion between the related widgets may be provided. For example, as shown in FIGS. 5A and 5B, according to the embodiment of the present invention, when a touch on the icon 216 is detected in the first hybrid widget 210 corresponding to the gallery application, the first hybrid widget 210 may be converted into the second hybrid widget 220 corresponding to the camera application. That is, when the user wants to execute the camera application during execution of the widget corresponding to the gallery application, the user executes the camera application. However, according to the embodiment of the present invention, the first hybrid widget corresponding to the gallery application may be substantially immediately converted into the second hybrid widget 220 corresponding to the camera application. The conversion into the second hybrid widget 220 corresponding to the camera application may be performed in the widget without execution of the camera application. Thus, according to the embodiment of the present invention, the hybrid function of performing the conversion between the widgets is provided, thereby expanding usability of the widget. That is, according to the embodiment of the present invention, due to a connection between the hybrid widgets related to each other with respect to the task, synergy effects between the hybrid widgets may be provided.

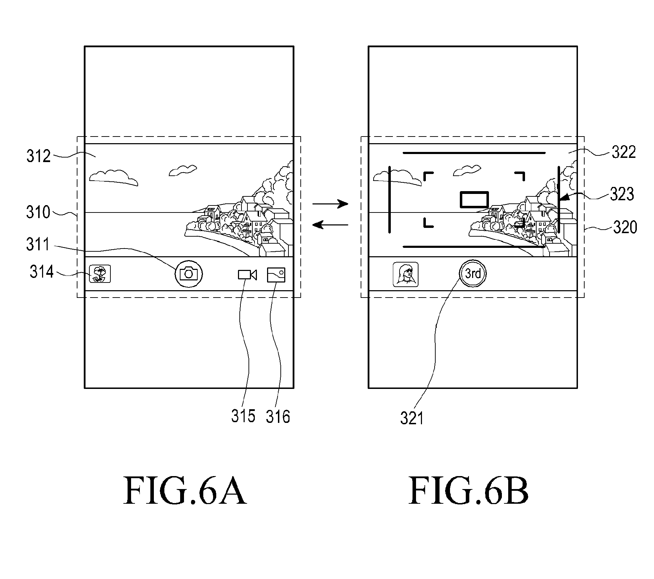

FIGS. 6A and 6B show examples of a screen where a control method of a mobile device provides a hybrid widget according to a first embodiment of the present invention.

Referring back to FIG. 4, in the control method of the mobile device providing the hybrid widget according to the first embodiment of the present invention, a first hybrid widget is displayed on a touch screen (step S110). A controller 110 of a mobile device 100 executes the first hybrid widget. The controller 110 displays the first hybrid widget on a touch screen 190. For example, referring to FIG. 6A, a first hybrid widget 310 is displayed on the touch screen 190. At this time, the first hybrid widget 310 is formed to correspond to a basic camera application. That is, the first hybrid widget 310 displays some functions or information of the basic camera application in a home screen. An icon 311 for photographing a still image, an icon 314 for displaying the photographed image on the touch screen, widget conversion button 316 and an icon 315 for photographing a moving image may be included in the first hybrid widget 310, and is displayed on the touch screen 190.

A gesture is detected (step S120) by controller 110. The gesture may correspond to a touch on an icon displayed in the first hybrid widget. The gesture may be preset and may be stored in a storage unit 175. Here, the icon may provide a function for converting the first hybrid widget into a second hybrid widget. Accordingly, the controller 110 may display the icon in the first hybrid widget, and detect a touch on the icon. For example, as shown in FIG. 6A, when a long touch on the icon 311 for photographing the still image is detected, the controller 110 may display an icon corresponding to the gesture. The controller 110 may detect the touch on the icon corresponding to the gesture.

In response to detection of the gesture, the first hybrid widget is converted into the second hybrid widget, and the second hybrid widget is displayed on the touch screen (step S 130). In response to detection of the gesture, the controller 110 converts the first hybrid widget into the second hybrid widget, and displays the second hybrid widget on the touch screen 190. The first hybrid widget may be related to the second hybrid widget. For example, the first and the second hybrid widgets may be related to each other with respect to a task. For example, the first hybrid widget may correspond to a basic camera application, and the second hybrid widget may correspond to a camera application which a third party has provided. The basic camera application refers to an application which a manufacturing company of the mobile device provides, and the third party provided camera application refers to a camera application which the third party other than the manufacturing company has provided. At this time, the first hybrid widget corresponding to the camera application, and the second hybrid widget corresponding to the third party provided camera application may be related to each other with respect to the task of photography.

For example, as shown in FIG. 6B, the controller 110 converts the first hybrid widget 310 into a second hybrid widget 320, and displays the second hybrid widget 320 on the touch screen 190. That is, in response to detection of the gesture, the controller 110 converts the first hybrid widget 310 corresponding to the basic camera application into the second hybrid widget 320 corresponding to the third party provided camera application. The controller 110 may display the second hybrid widget 320 on the touch screen 190. At this time, reference lines 323 for camera photography are displayed in the second hybrid widget 320 corresponding to the third party provided camera application. Moreover, an icon 321 for photographing a still image is also displayed in the second hybrid widget 320.

In response to detection of the gesture in the first hybrid widget 310 corresponding to the basic camera application, the first hybrid widget 310 may be converted into the second hybrid widget 320 corresponding to the third party provided camera application. That is, when the user wants to execute the third party provided camera application during execution of the widget corresponding to the basic camera application, the user executes the third party provided camera application. However, according to the embodiment of the present invention, the first hybrid widget corresponding to the basic camera application may be substantially immediately converted into the second hybrid widget corresponding to the third party provided camera application.

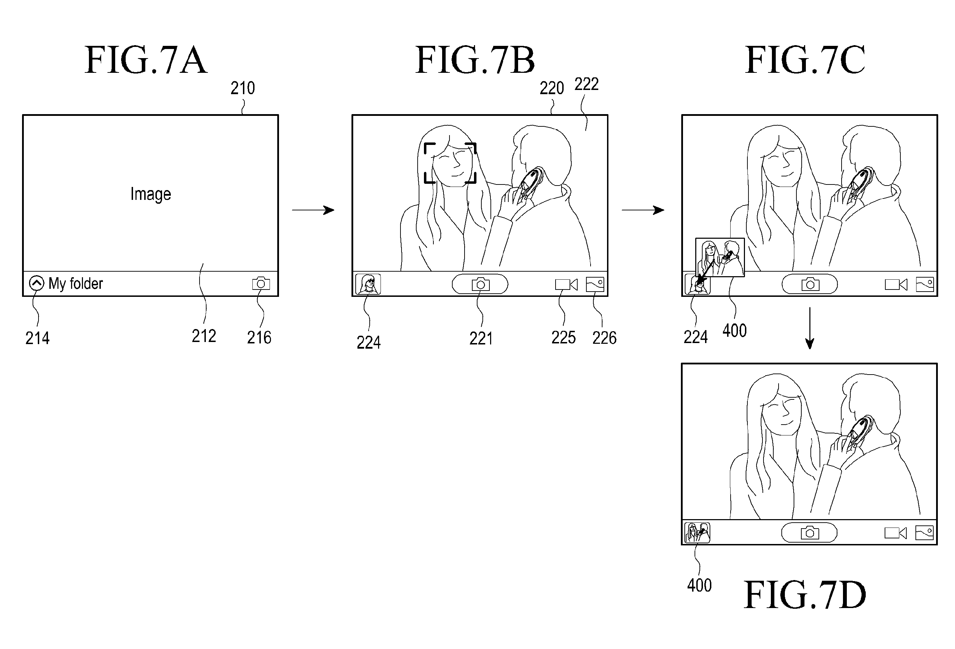

FIGS. 7A to 7D show examples of a screen where a control method of a mobile device provides a hybrid widget according to a second embodiment of the present invention.

Referring back to FIG. 4, first, in the control method of the mobile device providing the hybrid widget according to the second embodiment of the present invention, a first hybrid widget is displayed on a touch screen (step S110). A controller 110 of a mobile device 100 may execute the first hybrid widget. The controller 110 may display the first hybrid widget on a touch screen 190. For example, referring to FIG. 7A, a first hybrid widget 210 is displayed on the touch screen 190. At this time, the first hybrid widget 210 may be formed to correspond to a gallery application. That is, the first hybrid widget 210 may display some functions or information of the gallery application in a home screen. For example, as shown in FIG. 7A, the controller 110 may display, in the first hybrid widget 210, a function of displaying and providing a photograph 212 in a gallery form. Further, the controller 110 may display, in the first hybrid widget 210, an icon 214 for opening a folder in which the photograph has been stored.

A gesture is detected (step S120) by controller 110 as previously described. At this time, the gesture may correspond to a touch on an icon displayed in the first hybrid widget. The gesture may be preset and stored in a storage unit 175. The icon may provide a function for converting the first hybrid widget into a second hybrid widget. Accordingly, the controller 110 displays the icon in the first hybrid widget, and detects the touch on the icon. For example, as shown in FIG. 7A, the controller 110 may display an icon 216 in the first hybrid widget 210.

In response to detection of the gesture, the first hybrid widget is converted into the second hybrid widget, and the second hybrid widget is displayed on the touch screen (step S 130). In response to detection of the gesture, the controller 110 converts the first hybrid widget into the second hybrid widget, and displays the second hybrid widget on the touch screen 190. The first hybrid widget is related to the second hybrid widget. For example, the first and the second hybrid widgets are related to each other and to a task. For example, the first hybrid widget corresponds to the gallery application, and the second hybrid widget corresponds to a camera application.

For example, when a touch on the icon 216 displayed in the first hybrid widget is detected as shown in FIG. 7A, the controller 110 converts the first hybrid widget 210 into a second hybrid widget 220, and displays the second hybrid widget 220 on the touch screen 190 as shown in FIG. 7B. That is, when the touch on the icon 216 is detected, the controller 110 converts the first hybrid widget 210 corresponding to the gallery application into the second hybrid widget 220 corresponding to the camera application. The controller 110 displays the second hybrid widget 220 on the touch screen 190. At this time, an icon 221 for photographing a still image, an icon 224 for displaying the photographed image on the touch screen, an icon 225 for photographing a moving image, and an icon 226 for converting the second hybrid widget into the first hybrid widget are included in the second hybrid widget 220, and are displayed on the touch screen 190.

Moreover, when a touch on the icon 221 for photographing the still image is detected, the controller 110 photographs an image and store the photographed image in a storage unit 175, and reduces the photographed image 400 such that the photographed image 400 may be displayed on a lower side of a screen as shown in FIGS. 7C and 7D.

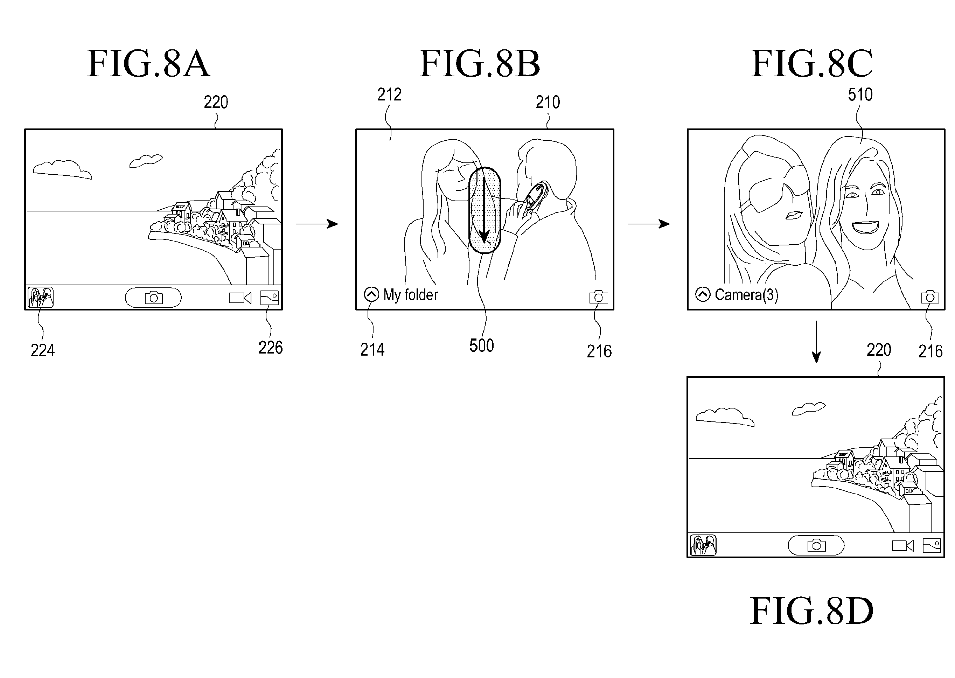

FIGS. 8A to 8D show examples of a screen where a control method of a mobile device provides a hybrid widget according to a third embodiment of the present invention.

Referring back to FIG. 4, the control method of the mobile device provides the hybrid widget and a first hybrid widget is displayed on a touch screen (step S110). A controller 110 of a mobile device 100 executes the first hybrid widget. The controller 110 displays the first hybrid widget on a touch screen 190. For example, referring to FIG. 8A, a first hybrid widget 220 is displayed on the touch screen 190. At this time, the first hybrid widget 220 is formed to correspond to a camera application. That is, the first hybrid widget 220 displays some functions or information of the camera application in a home screen. For example, as shown in FIG. 8A, the controller 110 displays, in the first hybrid widget 220, a function for photographing an image.

In (step S120) controller 110 detects the gesture as previously described. The gesture corresponds to a touch on an icon displayed in the first hybrid widget and is preset and stored in a storage unit 175, for example. The icon supports initiation of a function for converting the first hybrid widget into a second hybrid widget. Controller 110 displays the icon in the first hybrid widget, and detects a touch on the icon. For example, as shown in FIG. 8A, the controller 110 may display an icon 226 in the first hybrid widget 220.

In response to detection of the gesture, the first hybrid widget is converted into the second hybrid widget, and the second hybrid widget is displayed on the touch screen (step S 130). In response to detection of the gesture, the controller 110 converts the first hybrid widget into the second hybrid widget, and displays the second hybrid widget on the touch screen 190. The first hybrid widget is related to the second hybrid widget. For example, the first and the second hybrid widgets are related to each other and to a task. For example, the first hybrid widget corresponds to the camera application, and the second hybrid widget corresponds to a gallery application.

For example, when a touch on the icon 226 displayed in the first hybrid widget is detected as shown in FIG. 8A, the controller 110 converts the first hybrid widget 220 into a second hybrid widget 210, and displays the second hybrid widget 210 on the touch screen 190 as shown in FIG. 8B. In response to detection of the touch on the icon 226, the controller 110 converts the first hybrid widget 220 corresponding to the camera application into the second hybrid widget 210 corresponding to the gallery application. The controller 110 displays the second hybrid widget 210 on the touch screen 190.

For example, in response to detection of a gesture comprising a flick 500 on a photograph 212 displayed in the gallery application as shown in FIG. 8B, the controller 110 may display the next photograph 510 on the touch screen as shown in FIG 8C. In addition, the controller 110 displays, in the second hybrid widget 210, an icon 216 for a conversion into the first hybrid widget as shown in FIG. 8C. Accordingly, in response to detection of a touch on the icon 216 for the conversion into the first hybrid widget, the controller 110 converts the second hybrid widget 210 into the first hybrid widget 220, and displays the first hybrid widget 220 on the touch screen as shown in FIG. 8D. In response to detection of the touch on the icon 226 in the first hybrid widget 220 corresponding to the camera application, the first hybrid widget 220 is converted into the second hybrid widget 210.

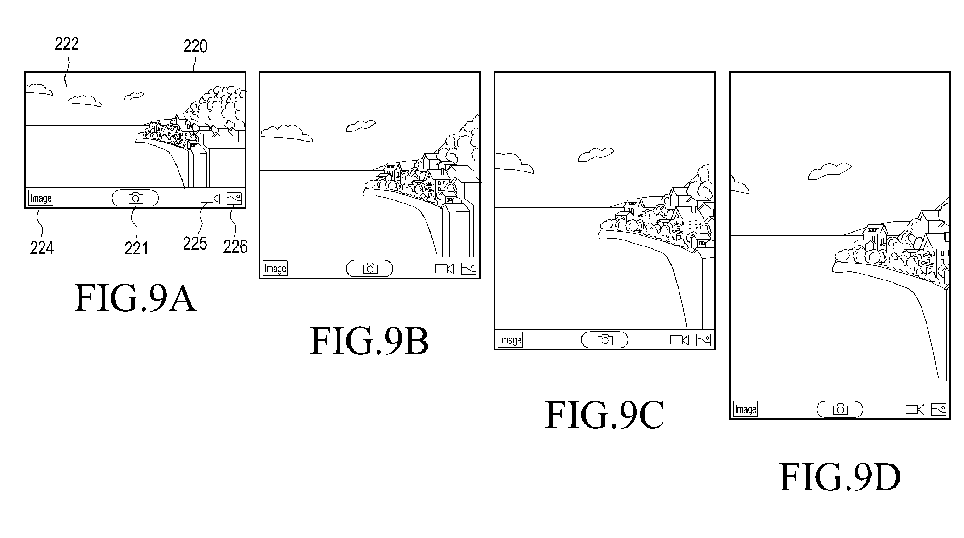

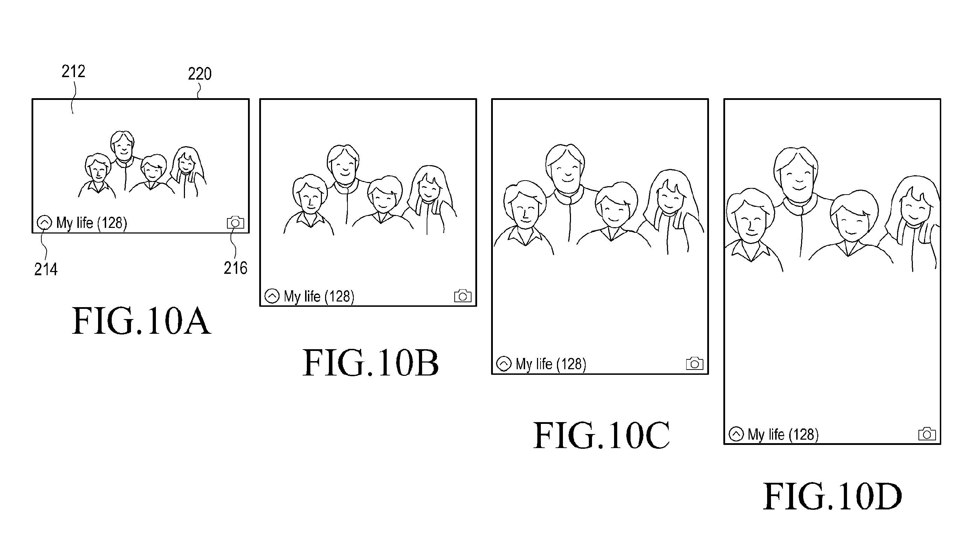

FIGS. 9A and 10D show examples of a screen where a control method of a mobile device provides a hybrid widget according to a fourth embodiment of the present invention.

Referring to FIG. 9, a first hybrid widget 220 is displayed on a touch screen as shown in FIG. 9A. The first hybrid widget 220 corresponds to a camera application. At this time, an icon 221 for photographing a still image, an icon 224 for displaying the photographed image on the touch screen, an icon 225 for photographing a moving image, and an icon 226 for a conversion into a second hybrid widget are displayed in the first hybrid widget 220. Accordingly, as described above with reference to FIG. 4, in response to detection of a touch on the icon 226 for the conversion into the second hybrid widget, the controller 110 converts the first hybrid widget into the second hybrid widget, and displays the second hybrid widget on the touch screen. A size of the first hybrid widget may be adaptively and dynamically changed in response to user command or automatically in response to a type of conversion being performed or application function type related to a second hybrid widget. For example, a 4x1 size widget with a horizontal length of 4 and a vertical length of 1 as shown in FIG. 9A may be changed to a 4x2 size widget with a horizontal length of 4 and a vertical length of 2 as shown in FIG. 9B, a 4x3 size widget with a horizontal length of 4 and a vertical length of 3 as shown in FIG. 9C, or a 4x4 size widget with a horizontal length of 4 and a vertical length of 4 as shown in FIG. 9D.

In addition, referring to FIG. 10, a first hybrid widget 220 is displayed on a touch screen as shown in FIG. 10A. The first hybrid widget 220 corresponds to a gallery application. At this time, an icon 214 for displaying a photo list, or an icon 216 for a conversion into a second hybrid widget is displayed in the first hybrid widget 220. Accordingly, as described above with reference to FIG. 4, in response to detection of a touch on the icon 216 for the conversion into the second hybrid widget, the controller 110 converts the first hybrid widget into the second hybrid widget, and displays the second hybrid widget on the touch screen. A size of the first hybrid widget may be adaptively and dynamically changed by controller 110. For example, a 4x1 size widget with a horizontal length of 4 and a vertical length of 1 as shown in FIG. 10A may be changed to a 4x2 size widget with a horizontal length of 4 and a vertical length of 2 as shown in FIG. 10B, a 4x3 size widget with a horizontal length of 4 and a vertical length of 3 as shown in FIG. 10C, or a 4x4 size widget with a horizontal length of 4 and a vertical length of 4 as shown in FIG. 10D.

It can be seen that the embodiments of the present invention are realized in a form of hardware, software, or a combination of hardware and software. The arbitrary software can be stored in, for example, irrespective of being erasable or rewritable, a volatile storage device, a non-volatile storage device such as a ROM, a memory such as a RAM, a memory chip device, and an integrated circuit, an optically or magnetically recordable and machine (for example, a computer) readable storage medium such as a CD, a DVD, a magnetic disk, and a magnetic tape. Moreover the embodiments of the present invention can be realized by a computer or a mobile device including a controller and a memory, and it can be seen that the memory corresponds to an example of the storage medium which is suitable for storing a program or programs including instructions by which the embodiments of the present invention are realized, and is machine readable. Accordingly, the present invention includes a program which includes a code for realizing a device and a method described in arbitrary claims of the present specification, and a storage medium which stores such a program as described above and is machine (computer) readable. Moreover, such a program as described above can be electronically transferred through an arbitrary medium such as a communication signal transferred through cable or wireless connection, and the present invention properly includes the things equivalent to that.

Moreover, the above-described mobile device can receive the program from a program provision device which is connected thereto in a wired or wireless manner, and store the program. The program provision device may include a program including instructions which allow execution of the embodiments of the present invention, a memory for storing information necessary for the embodiments of the present invention, a communication unit for performing wired or wireless communication with the mobile device, and a controller for transmitting a corresponding program to the transmitter/receiver in response to a request of the mobile device or automatically.

## Claims

1. A control method of a mobile device providing hybrid widgets, the control method being **characterized by**:
employing at least one processing device (110) for,
displaying a first hybrid widget on a touch screen (190);
detecting a gesture made via said touch screen; and
in response to detection of the gesture made via said touch screen, converting the first hybrid widget into a second hybrid widget, and displaying the second hybrid widget on the touch screen.

2. The control method of claim 1, **characterized in that** the gesture comprises touch of an icon displayed in the first hybrid widget.

3. The control method of claim 1, **characterized in that** the first hybrid widget and the second hybrid widget are related to each other and a task.

4. The control method of claim 1, **characterized in that** sizes of the first hybrid widget and the second hybrid widget are changed.

5. The control method of claim 1, **characterized in that** the first hybrid widget corresponds to a gallery application, and the second hybrid widget corresponds to a camera application.

6. A mobile device providing hybrid widgets, the mobile device being **characterized by**:
a touch screen (190) displaying a first hybrid widget; and
a controller (110),
detecting a gesture made via said touch screen, and
in response to detecting the gesture made via said touch screen,
converting the first hybrid widget into a second hybrid widget, and displaying the second hybrid widget on the touch screen.

7. The mobile device of claim 6, **characterized in that** the gesture comprises touch of an icon displayed in the first hybrid widget.

8. The mobile device of claim 6, **characterized in that** the first hybrid widget and the second hybrid widget are related to each other and a task.

9. The mobile device of claim 6, **characterized in that** sizes of the first hybrid widget and the second hybrid widget are changed.

10. The mobile device of claim 6, **characterized in that** the first hybrid widget corresponds to a gallery application, and the second hybrid widget corresponds to a camera application.

11. The mobile device of claim 6, wherein
said first hybrid widget includes a first displayed image, a first button and an associated first application function and said controller converts the first hybrid widget to the second hybrid widget including a second displayed image, a second button and an associated second application function.

12. The mobile device of claim 6, wherein
said controller converts the first hybrid widget to the second hybrid widget by selecting said second hybrid widget from a plurality of different hybrid widgets using a map.

13. The mobile device of claim 12, wherein
said controller converts the first hybrid widget to the second hybrid widget by selecting said second hybrid widget from a plurality of different hybrid widgets in response to a type of relationship between the first application and second application.
